(19) Europäisches Patentamt
European Patent Office
Office européen des brevets

(11) **EP 3 496 259 B1**

(12) **EUROPÄISCHE PATENTSCHRIFT**

(45) Veröffentlichungstag und Bekanntmachung des Hinweises auf die Patenterteilung:
**27.04.2022 Patentblatt 2022/17**

(21) Anmeldenummer: **19153765.3**

(22) Anmeldetag: **28.06.2012**

(51) Internationale Patentklassifikation (IPC):
**H02M 7/493** $^{(2007.01)}$    **H02M 3/158** $^{(2006.01)}$
**H02M 7/483** $^{(2007.01)}$

(52) Gemeinsame Patentklassifikation (CPC):
**H02M 7/483; H02M 3/158; H02M 3/1582; H02M 7/4833; H02M 7/4835;** H02M 7/493

(54) **ELEKTRISCHES UMRICHTERSYSTEM**

ELECTRICAL CONVERTER SYSTEM

SYSTÈME DE CONVERTISSEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2011 DE 102011108920**

(43) Veröffentlichungstag der Anmeldung:
**12.06.2019 Patentblatt 2019/24**

(62) Dokumentnummer(n) der früheren Anmeldung(en) nach Art. 76 EPÜ:
**12732790.6 / 2 737 618**

(73) Patentinhaber: **Technische Universität München 80333 München (DE)**

(72) Erfinder:
• **GÖTZ, Stefan, M.**
 **85659 Forstern (DE)**
• **WEYH, Thomas**
 **80637 München (DE)**

(74) Vertreter: **Lucke, Andreas Boehmert & Boehmert Anwaltspartnerschaft mbB Pettenkoferstrasse 22 80336 München (DE)**

(56) Entgegenhaltungen:
**WO-A2-03/090331    WO-A2-2012/072168**

**Beschreibung**

Die Erfindung betrifft ein elektrisches Umrichtersystem sowie ein entsprechendes Verfahren. Derartige Umrichter haben sehr vielfältige Einsatzmöglichkeiten. Sie können beispielsweise zur gesteuerten Stromversorgung elektrischer Maschinen, aber auch zur Anbindung von Gleichstromquellen (Batteriespeicher, Solaranlagen) an ein Wechselstromnetz verwendet werden. Bisherige modulare Multilevelkonvertertopologien arbeiten prinzipiell nur mit der Seriellschaltung von Modulen und deren Energiespeichern, wobei üblicherweise Kondensatoren als Energiespeicher verwendet werden.

HINTERGRUND DER ERFINDUNG

Halbleiterstromrichter, beispielsweise in Form von Leistungsreglern, Wechselrichtern oder Umrichtern, bilden seit Jahren ein zentrales Element der Leistungselektronik. Das Anwendungsfeld erstreckt sich dabei auf alle Leistungsklassen. In Motoren wurden mechanische Kommutatoren durch elektronische Schaltungen ersetzt, Transformatoren wurden in vielen Anwendungen entweder überflüssig oder deren Leistungsfluss bei gleicher Größe (durch die Erzeugung höherer Frequenzen) um Größenordnungen erhöht. Diverse Anwendungen wurden überhaupt erst durch die elektronische Umrichtung ermöglicht oder finanzierbar. Verteilte Einspeisung mit Photovoltaikanlagen in das Ortsnetz zählt dazu ebenso wie die Gleichstromübertragung und Kopplung an Wechselspannungsnetze bei höherem Leistungsfluss (ohne den Einsatz von mechanischen Umformersätzen).

Trotzdem verfügen diese Systeme über mehrere bisher nur unzureichend gelöste Probleme. Linearregler sind bereits bei mittleren Leistungsflüssen aufgrund ihrer starken Energieverluste nicht tolerierbar. Das Zurückgreifen auf getaktete Schaltschemata in Verbindung mit strom- bzw. spannungs-begrenzenden Bauteilen mit einer Dynamik erster Ordnung führt dagegen zur Erzeugung enormer Oberwellen und einerseits der gleichzeitigen Abstrahlung durch eben jene letztgenannten Elemente, andererseits zu sich ausbreitenden Schwingungen auf den Leitungen selbst. Insbesondere reagieren diverse Leistungshalbleiter, beispielsweise SCR und GTO, selbst sehr labil auf schnelle Spannungsdynamik. Kommutierungsprobleme im Umrichter von Netzkopplungen oder Überkopfzünden in Thyristoren erzwingen äußerst aufwändige Filtermaßnahmen, die in der Regel mit der Umsetzung der höheren Harmonischen in Wärme arbeiten.

Darüber hinaus lassen sich Leistungshalbleiter nur für relativ niedrige Spannungen von wenigen Kilovolt sinnvoll herstellen und einsetzen. Für hohe Anforderungen an Spannung, Leistung, Oberwellenanteile, Verzerrung und insbesondere auch Ausfallsicherheit richtet sich der Fokus fast ausschließlich auf Multilevelkonverter-Systeme. Unangefochten dabei ist die allgemein bekannte modulare Variante, der modulare Multilevelkonverter, wie er in DE 102 17 889 A1 genauer beschrieben ist.

Dieses Umrichter-System ist in der Lage nahezu beliebige zeitliche Spannungsverläufe von den Klemmenpaaren der einen Seite in ebenso beliebige Verläufe zwischen den Klemmenpaaren der anderen Seite umzusetzen, ohne dabei seinem Prinzip nach zwischen einem Ein- und einem Ausgang unterscheiden zu müssen. Bei diesem modularen Multilevelkonverter wird jede Phase des Umrichters aus einer Vielzahl von in Serie geschalteten identischen Einzelmodulen aufgebaut. Jedes Einzelmodul fungiert als ein Zweipol und enthält ein Energiespeicherelement in Form eines Kondensators, sowie mehrere Schaltelemente, die für beide Spannungsrichtungen wahlweise Strom aufnehmen oder abgeben können und damit alle vier Quadranten des Strom-Spannungs-Graphen erreichen. Insbesondere können diese Einzelmodule über ihre Schalter in die folgenden vier Zustände geschaltet werden:

- Vorgabe einer positiven Klemmenspannung bei beliebiger Stromrichtung;
- Vorgabe einer negativen Spannung mit beliebiger Stromrichtung;
- Bypasszustand (d. h. keine Energieaufnahme oder -abgabe durch das Einzelmodul), freier Stromfluss in beliebiger Richtung;
- Erzwingen einer Energieaufnahme durch das Einzelmodul unter Aufzwingen des Spannungsniveaus.

Ein solches Einzelmodul ist somit - bei entsprechender Steuerung beispielsweise mit getaktetem Schalten der aktiven Elemente (ggf. in Analogie zur Pulsweitenmodulation) - bereits in der Lage seine Energieaufnahme und -abgabe beliebig zu steuern und einer Quelle eine virtuelle Last mit bestimmten Eigenschaften näherungsweise vorzutäuschen. Diese Module können nun je nach Anwendungswunsch für n Quellen (beispielsweise zwei einlaufende Spannungssysteme) und m Ausgänge (beispielsweise ein Dreiphasenniederspannungssystem) für vollen Vierquadrantenbetrieb verschaltet werden. Eine Kombination zweier Serienschaltungen aus jeweils z Modulen wird dabei als Phasenmodul bezeichnet, wobei die beiden Serienschaltungen jeweils einen sogenannten Brückenzweig bilden. Die Anzahl z der Module in jedem Brückenzweig definiert Spannungs- und Oberwelleneigenschaften des Umrichters. Die Phasenmodule wiederum bilden die Grundbausteine eines ein- oder mehrphasigen Stromrichters. So kann beispielsweise durch zwei zusammengeschaltete Phasenmodule ein System zur Umwandlung einer 1-phasigen Wechselspannung bzw. einer Gleichspannung in eine andere 1-phasige Wechselspannung bzw. eine Gleichspannung verwendet werden. Der Aufbau eines solchen Systems ist dabei vollkommen symmetrisch bezüglich der Ein- bzw. Ausgänge und ermöglicht somit gegenüber jedem Anschlusspaar einen vollständigen Vierquadrantenbetrieb. Weiterhin kann sowohl eingangsseitig aus auch ausgangsseitig des Verhalten des Stromrichters bzgl. induktivem oder kapazitivem Verhalten individuell angepasst werden. Der Energiefluss ist somit auch in beide Richtungen möglich und kann dynamisch verändert werden.

Weiterhin kann beispielsweise durch drei zusammengeschaltete Phasenmodule ein System zur Umwandlung einer 3-phasigen Wechselspannung in eine 1-phasige Wechselspannung bzw. eine Gleichspannung realisiert werden. Die zusammengefassten Anschlüsse der Phasenmodule können auch als sogenannte (Gleichspannungs-) Sammelschiene betrachtet werden, so dass durch Zusammenschalten von n + m Phasenmodulen eine Netzkupplung für die Kopplung eines n-phasiges Netzes mit einem m-phasigen Netz entsteht.

Trotz der enormen Vorzüge der letztgenannten, darunter - ohne Anspruch auf Vollständigkeit - die hohe Ausfallsicherheit wegen des integrierten Redundanzaufbaus, prinzipiell bereits automatische Spannungssymmetrierung der Module und Halbleiter, vollständiger Vierquadrantenbetrieb, fest definierte maximal nötige Sperrspannungen für alle Halbleiter weit unter der Maximalspannung der Klemmenpaare des Gesamtsystems, besitzt auch diese Topologie noch einige nur unzureichend gelöste Probleme. Einige dieser Schwachstellen, wie beispielsweise die nötige enorme Überauslegung, werden mit der Technik, die in der zum Zeitpunkt der vorliegenden Anmeldung noch nicht veröffentlichten Anmeldung DE 10 2010 052 934.6 beschrieben ist, überwunden. Die hier beschriebene Verbesserung bot bereits die Möglichkeit, die neuen Module und deren Speicher durch die hinzukommenden Schaltzustände effektiver zu nutzen und gegebenenfalls sogar einen Ladungsausgleich zwischen den Modulen zu ermöglichen. Letzteres war jedoch nicht primäres Ziel.

In dieser noch nicht veröffentlichten Anmeldung DE 10 2010 052 934.6 wird eine spezielle Variante des modularen Multilevelconverters beschrieben, der ebenfalls aus mehreren Einzelmodulen aufgebaut ist, aber zusätzlich so ausgeführt ist, dass die als Energiespeicherelemente verwendeten Kondensatoren wahlweise parallel oder seriell geschaltet werden können. Die Einzelmodule sind dabei so ausgelegt, dass über interne Schaltelemente wahlweise ein paralleles oder serielles Schalten der Energiespeicherelemente möglich ist, so dass keine zusätzlichen externen Schalter wie bei der Matrixadressierung erforderlich sind.

Gleichzeitig gewährleistet diese beschriebene Technik, dass die Spannungsbelastung der internen Schaltelemente nicht wesentlich über der Maximalspannung der Kondensatoren liegt.

Auch die WO2008046772 A1 offenbart ein elektrisches elektrisches Umrichtersystem, bei dem Energiespeicherelemente 11 der Module 4.n wahlweise parallel oder seriell geschaltet werden können. Der grundlegende Vorteil einer solchen wahlweisen Verschaltung liegt darin, dass eine Parallelschaltung der Energiespeicherelemente der Einzelmodule den Gesamtinnenwiderstand des Umrichters (oder eines Zweiges des Umrichters) verringern, so dass der Umrichter in diesem Schaltzustand ein Vielfaches mehr an Leistung bereitstellen kann, als dies bisherige Umrichter bei niedrigen Ausgangsspannungen können. Weiterhin können damit je nach Anwendungsfall auch die Kondensatoren in den Einzelmodulen verkleinert werden. Weiterhin kann ein solches System auch mit hoher Effizienz Gleich- und Wechselspannungen im Umrichterbetrieb von der Quelle zur Last erhöhen, in dem bei Energieaufnahme aus der Quelle viele Modul-Kondensatoren parallel geschaltet werden und anschließend bei der Energieabgabe diese Kondensatoren entsprechend in Reihe geschaltet werden.

Bei dieser Schaltung kann allerdings das Problem eines verlustreichen Ladungsausgleiches auftreten. Die Umschaltung von seriellem Betrieb einzelner Modul-Kondensatoren in einen parallelen Betrieb sollte bei dieser Umrichter-Variante vorzugsweise nur dann erfolgen, wenn die einzelnen Spannungen der parallel zu schaltenden Kondensatoren nahezu gleich sind. Andernfalls findet ein Ladungsausgleich mit Energieverlusten statt, wie im folgenden Beispiel gezeigt wird:

Gegeben seien Module mit den zwei Kondensatoren 1 und 2, wobei der erste Kondensator die Kapazität $C_1$ und die Spannung $U_1$ hat, und der zweite Kondensator die Kapazität $C_2$ und die Spannung U2.

Durch das Parallelschalten der beiden Module bzw. ihrer Kondensatoren ergibt sich eine neue Kapazität $C_{ges} = C_1 + C_2$.

Gleichzeitig muss aber die Ladung $Q_{ges,neu}$ des Gesamtsystems erhalten bleiben, so dass sich die neue Ladung aus der Summe der beiden Teilladungen der Kondensatoren $C_1$ und $C_2$ ergibt:

$$Q_{ges,neu} = Q_1 + Q_2 = C_1 \cdot U_1 + C_2 \cdot U_2$$

Über diese Gesamtladung lässt sich einerseits die Spannung des Systems der parallelgeschalteten Kondensatoren bestimmen zu

$$U_{neu} = \frac{Q_{ges,neu}}{C_{ges}} = \frac{C_1 \cdot U_1 + C_2 \cdot U_2}{C_1 + C_2};$$

andererseits ergibt sich die im System der parallelgeschalteten Kondensatoren gespeicherte Energie $E_{ges}$ zu:

$$E_{ges} = \frac{1}{2} C_{ges} \cdot U_{ges}^2 = \frac{1}{2} \cdot \frac{(C_1 \cdot U_1 + C_2 \cdot U_2)^2}{C_1 + C_2}$$

Wenn $U_1 \neq U_2$, dann ist diese Energie kleiner als die vorher in den einzelnen Kondensatoren gespeicherte Energie:

$$E_{ges} \leq \frac{1}{2} C_1 \cdot U_1^2 + \frac{1}{2} C_2 \cdot U_2^2$$

Die Energiedifferenz zur vorher in den beiden Kondensatoren gespeicherten Energie ergibt sich zu

$$\Delta E = \frac{1}{2} \cdot \frac{C_1 \cdot C_2}{C_1 + C_2} \cdot \Delta U^2,$$

wobei ΔU die Differenz der beiden Kondensatorspannungen darstellt. Diese Energiedifferenz geht während des Parallelschalt-Prozesses verloren und hängt quadratisch von der Spannungsdifferenz der Kondensatoren ab.

Wenn beispielsweise das Parallelschalten der Kondensatoren über einen Widerstand erfolgt, wird diese Energiedifferenz im Widerstand in Wärme umgewandelt. Da die Energiedifferenz nicht vom Wert des Widerstandes abhängt, verändert sich durch unterschiedliche Widerstandswerte nur der Strom, die Leistung und die Umladezeit.

Speziell bei den genannten Umrichterschaltungen müsste ein solcher Parallelschaltvorgang allerdings mit sehr kleinen (Schutz-)Widerständen erfolgen, da sonst diese Widerstände - welche sich permanent im Strompfad des Umrichters befinden - zu hohen Verlusten des Stromrichters führen. Dies wiederum führt zu hohen Umladeströmen, welche die Halbleiterschalter des Umrichters stark belasten können.

Für ein System aus n parallel zu schaltenden Modulen ergibt sich entsprechend nach dem Parallelschalten eine Spannung zu:

$$U_{neu} = \frac{\sum\limits_{i} C_i \cdot U_i}{\sum\limits_{i} C_i}$$

Die Energiedifferenz $\Delta E_n$ zwischen der Summe der einzelnen Kondensatorenergien und der Energie des parallel geschalteten Systems ergibt sich zu:

$$\Delta E_n = \frac{1}{2} \left( \sum\limits_{i} C_i \cdot U_i^2 - \frac{\left( \sum\limits_{i} C_i \cdot U_i \right)^2}{\sum\limits_{i} C_i} \right)$$

Bei Umrichtern nach der Technik, die in der zum Zeitpunkt der vorliegenden Anmeldung noch nicht veröffentlichten Anmeldung DE 10 2010 052 934.6 beschrieben ist, muss daher im Betrieb darauf geachtet werden, dass die Spannungsdifferenzen zwischen parallel zu schaltenden Kondensatoren nie zu große Werte annehmen bzw. in solchen Fällen nur selten parallel geschaltet wird. Andernfalls treten innerhalb der Einzelmodule des Umrichters relativ große Energieverluste und hohe Ausgleichsströme auf.

Andererseits zieht ein möglichst universeller Einsatz eines solchen modularen Umrichters fast zwangsläufig Spannungsdifferenzen zwischen den Modul-Kondensatoren mit sich, da es einerseits kaum möglich ist, über eine Steuerung des Umrichters dafür zu sorgen, dass bei allen beteiligten Kondensatoren immer die gleiche Ladung zu- oder abgeführt wird; weiterhin führen bereits die - teilweise beachtlichen - Kapazitätstoleranzen dieser Modul-Kondensatoren zu entsprechenden Spannungsdifferenzen.

Gerade bei Systemen mit hohen Modulspannungen und schneller Taktung bzw. häufigem Wechsel von serieller zu paralleler Schaltung der Modul-Kondensatoren führt dies zu unnötig hohen Umladeverlusten.

ÜBERSICHT ÜBER DIE ERFINDUNG

Daher ist es die Aufgabe der vorliegenden Erfindung, bei den Energiespeicherelementen eines modular aufgebauten Umrichters mit der Möglichkeit einer Umschaltung von seriellem auf parallelem Betrieb der Energiespeicherelemente für einen Ladungsausgleich dergestalt zu sorgen, dass unmittelbar vor einer Parallelschaltung von Energiespeicherelementen die entsprechenden Energiespeicherelementspannungen verlustarm einander angeglichen werden. Dabei sollen vorzugsweise wahlweise mindestens zwei und maximal alle Energiespeicherelemente eines Brückenzweiges eines solchen modularen Umrichters parallel geschaltet werden können.

Erfindungsgemäß wird diese Aufgabe durch ein elektrisches Umrichtersystem nach Anspruch 1 und durch ein Verfahren zur Ansteuerung eines Umrichters zur Steuerung von Strömen und Spannungen nach Anspruch 13 gelöst. Die Unteransprüche definieren bevorzugte und vorteilhafte Ausführungsformen der vorliegenden Erfindung.

Die Erfindung basiert auf der Erkenntnis, dass einerseits ein modulares Umrichtersystem mit wahlweiser Parallel- bzw. Seriell-Schaltung der Speicherkondensatoren große Vorteile bietet, andererseits diese Vorteile nur dann vollständig genutzt werden können, wenn vor einer geplanten Parallelschaltung der Speicherkondensatoren die entsprechenden Kondensatorspannungen aneinander angeglichen werden.

Im Rahmen der vorliegenden Offenbarung wird ferner zu Illustrationszwecken ein Elektrisches Umrichtersystem für Stromversorgungen beschrieben, bestehend aus mindestens zwei gleichartigen hintereinander geschalteten Modulen. Jedes Modul weist dabei mindestens 4 Anschlüsse auf, um über jeweils mindestens zwei Anschlüsse mit seinem rechten und linken Nachbarmodul verbunden werden zu können. Weiterhin weist jedes Modul mindestens einen Modul-Kondensator zur Energiespeicherung und Schaltelemente auf. Über diese Schaltelemente können die beiden Anschlüsse des Modul-Kondensators elektrisch mit den jeweiligen Anschlüssen des Moduls verbunden werden. Auf diese Weise können die Modul-Kondensatoren der Module über die Schaltelemente wahlweise in Serie als auch parallel geschaltet werden. Insbesondere können einzelne Modul-Kondensatoren des Umrichters in Serie und gleichzeitig weitere Modul-Kondensatoren parallel geschaltet werden, so dass die gebildete Serienschaltung in Serie zu der ebenfalls gebildeten Parallelschaltung liegt. Weiterhin können durch entsprechende Einstellung der Schaltelemente auch einzelne Modul-Kondensatoren aus der Verschaltung ausgenommen werden, so dass die entsprechenden Module zwar ihr linkes benachbartes Modul elektrisch mit dem rechten benachbarten Modul verbinden, ihr eigener Modul-Kondensator dabei aber weder geladen noch entladen wird.

Bei dem Energiespeicherelement kann es sich insbesondere um Kondensatoren handeln, auf die in der folgenden Erläuterung beispielhaft Bezug genommen wird. Allerdings müssen die entsprechenden Module gegenüber den in der bislang noch nicht veröffentlichten Anmeldung DE 10 2010 052 934.6 beschriebenen Modulen modifiziert werden und die Ansteuerung der Schaltelemente verändert werden, wie im folgenden beschrieben wird:

Der Parallelschalt-Vorgang wird eingeleitet, indem zunächst einer der beiden Betriebszustände a) oder b) des elektronischen Umrichters ermittelt wird:

a) Laden der Kondensatoren der Module mit einem positiven Ladestrom; d.h. die Kondensatorspannung der beteiligten Modul-Kondensatoren steigt.
b) Entladen der Kondensatoren der Module mit einem negativen Ladestrom; d.h. Kondensatorspannung der beteiligten Modul-Kondensatoren sinkt.

Anschließend wird aus der Gruppe der parallel zu schaltenden Modul-Kondensatoren in Abhängigkeit von ihrer Spannung eine Reihenfolge zugeordnet

Im Fall a) wird derjenige Kondensator mit der niedrigsten Spannung ausgewählt und über eine entsprechende Verschaltung der Schaltelemente der Module so geschaltet, dass er aufgeladen wird, d.h. seine Kondensatorspannung steigt. Wenn die Ladespannung dieses Kondensators den Wert des Kondensators mit der zweitniedrigsten Spannung erreicht, wird dieser zweite Kondensator parallel mit dem ersten Kondensator verbunden und weitergeladen. Dieser Vorgang wird entsprechend weitergeführt, bis auch der Kondensator mit der höchsten Spannung zu dem Gesamtsystem parallel geschaltet werden kann.

Im Fall b) wird derjenige Kondensator mit der höchsten Spannung ausgewählt und über eine entsprechende Verschaltung der Halbleiterschalter der Module so geschaltet, dass er entladen wird. Wenn die Ladespannung dieses Kondensators den Wert des Kondensators mit der zweithöchsten Spannung erreicht, wird dieser zweite Kondensator parallel mit dem ersten Kondensator verbunden und weiter entladen. Dieser Vorgang wird entsprechend weitergeführt, bis auch der Kondensator mit der niedrigsten Spannung zu dem Gesamtsystem parallel geschaltet werden kann.

Die Ladeströme durch die die Kondensatoren hierbei geladen oder entladen werden, sind dabei üblicherweise direkt die Ströme mit denen der Umrichter betrieben wird. Daher sind diese Ströme üblicherweise relativ groß, so dass die Spannungsänderungen an den betreffenden Kondensatoren auch sehr schnell erfolgen. Entsprechend erfolgt auch der oben beschriebene Ladungsausgleich sehr schnell und kann leicht zwischen zwei Schaltzyklen des Umrichters durchgeführt werden. Wenn andererseits der Umrichterstrom aktuell sehr klein ist, kann - wegen der geringen Umrichterverluste - auch auf die entsprechende Parallelschaltung von Modul-Kondensatoren verzichtet werden.

Bei dieser Ausführungsform des Umrichters gemäß der vorliegenden Erfindung muss beachtet werden, dass bei der Sortierung der Modul-Kondensatoren in eine Reihenfolge der Spannung nicht zwangsläufig ein Modul-Kondensator mit der nächsthöheren (bzw. nächstniedrigeren) Spannung unmittelbar benachbart positioniert ist. Für diesen Fall ist es notwendig, dass die Module hinsichtlich ihrer Schaltelemente so ausgeführt sind, dass ein Parallelschalten von Modul-Kondensatoren auch möglich ist, wenn deren Module nicht unmittelbar benachbart sind; d.h. wenn eines oder mehrere Module dazwischen liegen. Die Modul-Kondensatoren dieser dazwischenliegenden Module sollen dabei zunächst noch nicht in den Ladeprozess integriert werden. Hierzu genügt es, wenn ein Anschluss eines solchen Modul-Kondensators über ein entsprechendes Schaltelement frei geschaltet ist, also nicht mit dem entsprechenden Stromkreis verbunden ist. Gleichzeitig müssen aber die Schaltelemente dieses übersprungenen Moduls gewährleisten, dass der Stromfluss zwischen den Modulen deren Kondensatoren parallel geschaltet werden sollen, gewährleistet ist.

Für einen derartigen Umrichter kann vorzugsweise weiterhin eine Messschaltung eingesetzt werden, welche die Spannungswerte der einzelnen Kondensatoren misst.

Außerdem wird für einen solchen Umrichter eine Steuerschaltung eingesetzt, welche einerseits die gemessenen Spannungen der Modul-Kondensatoren in eine den Modulen zugeordnete Reihenfolge bringen kann und andererseits die Module so ansteuert, dass die oben beschriebene zeitliche Abfolge der Parallelschaltung realisiert werden kann.

Daher wird im Rahmen der vorliegenden Offenbarung ein elektrisches Umrichtersystem bestehend aus mindestens zwei gleichartigen hintereinander geschalteten Modulen bereitgestellt. Jedes Modul weist dabei mindestens 4 Anschlüsse auf, um über jeweils mindestens zwei Anschlüsse mit seinem rechten und linken Nachbarmodul verbunden werden zu können. Weiterhin weist jedes Modul mindestens einen Modul-Kondensator zur Energiespeicherung und Schaltelemente auf. Über diese Schaltelemente können die beiden Anschlüsse des Modul-Kondensators elektrisch mit den jeweiligen Anschlüssen des Moduls verbunden werden. Auf diese Weise können die Modul-Kondensatoren der Module über die Schaltelemente wahlweise in Serie als auch parallel geschaltet werden. Insbesondere können einzelne Modul-Kondensatoren des Umrichters in Serie und gleichzeitig weitere Modul-Kondensatoren parallel geschaltet werden, so dass die gebildete Serienschaltung in Serie zu der ebenfalls gebildeten Parallelschaltung liegt. Weiterhin können durch entsprechende Einstellung der Schaltelemente auch einzelne Modul-Kondensatoren aus der Verschaltung ausgenommen werden, so dass die entsprechenden Module zwar ihr linkes benachbartes Modul elektrisch mit dem rechten benachbarten Modul verbinden, ihr eigener Modul-Kondensator dabei aber weder geladen noch entladen wird. In diesem Fall erfolgt also eine direkte elektrische Verbindung eines Moduls zu einem nicht unmittelbar benachbarten Modul unter Überspringen der dazwischenliegenden Module, wobei die direkte elektrische Verbindung mindestens zweipolig sein muss, wenn eine Parallelschaltung von Modul-Kondensatoren unter Überspringen dazwischenliegender Module vorgenommen werden soll.

Dadurch, dass einzelne Modul-Kondensatoren aus der Verschaltung ausgenommen werden können, kann vor einer gewünschten Parallelschaltung zweier oder mehrerer Modul-Kondensatoren ein Angleichen der Kondensatorspannung nach der nachfolgend beschriebenen Lade- oder Entladestrategie vorgenommen werden. Diese Ladestrategie erfolgt direkt unter der äußeren Strombelastung des Umrichters (d.h. der Hintereinanderschaltung der Module), so dass je nach Stromrichtung des Laststroms durch den Umrichter ein erster Modul-Kondensator dieser geplanten Parallelschaltung zunächst aufgeladen oder entladen wird.

Die Auswahl dieses ersten Modul-Kondensators erfolgt je nachdem, ob der Laststrom den Kondensator auflädt, als den Modul-Kondensator mit der niedrigsten Spannung oder wenn der Laststrom den Kondensator entlädt, als den Modul-Kondensator mit der höchsten Spannung.

Anschließend wird ein parallelzuschaltender Modul-Kondensator ausgewählt, wobei hierfür entweder der Kondensator mit der zweitniedrigsten Spannung gewählt wird, wenn der Laststrom den ersten Modul-Kondensator auflädt. Bzw. es wird der Kondensator mit der zweithöchsten Spannung gewählt, wenn der Laststrom durch den Umrichter den ersten Modul-Kondensator entlädt.

Dieser parallelzuschaltende Modul-Kondensator wird aber erst dann mit dem ersten Modul-Kondensator parallel geschaltet, wenn der Laststrom den ersten Modul-Kondensator so weit aufgeladen bzw. entladen hat, dass er die gleiche Spannung wie der ausgewählte parallelzuschaltende Modul-Kondensator hat. Auf diese Weise werden beim Parallelschalten der Kondensatoren über die Schaltelemente Umladeverluste vermieden.

Er erfolgt dann eine Wiederholung der vorigen beiden Schritte, bis alle Modul-Kondensatoren deren Parallelschaltung erfolgen soll, miteinander parallel geschaltet sind.

Dieses beschriebene Angleichen der Spannung vor dem Parallelschalten kann sehr schnell geschehen, da übliche Lastströme durch den Umrichter relativ groß zu den Lade- oder Entladezeiten der entsprechenden Modul-Kondensatoren sind. Insbesondere ist die Parallelschaltung von Kondensatoren insbesondere dann gewünscht, wenn der Umrichter mit sehr hohen Lastströmen beaufschlagt wird. Daher kann das Angleichen der Spannungen leicht zwischen zwei Schaltzyklen des Umrichters erfolgen.

In einer bevorzugten Ausführungsform der vorliegenden Erfindung bestehen die Module des Umrichtersystems aus einem Modul-Kondensator und jeweils zwei parallel zum Modul-Kondensator liegenden Serienschaltungen von je zwei Schaltelementen. Jede dieser beiden Serienschaltungen enthält somit einen Verbindungspunkt zwischen zwei aufeinanderfolgenden Schaltern einer Serienschaltung. Diese zwei Verbindungspunkte bilden die zwei Anschlüsse des Moduls zum ersten benachbarten Modul. Weiterhin werden zwei weitere Anschlüsse des Moduls zum zweiten benachbarten Modul gebildet über je ein weiteres Schaltelement zum oberen bzw. zum unteren Anschluss des Modul-Kondensators. Zusätzlich verbindet noch ein weiteres Schaltelement den einen Anschluss zum ersten benachbarten Modul mit einem anderen Anschluss zum zweiten benachbarten Modul, so dass über dieses Schaltelement zwischen diesen beiden Anschlüssen eine direkte elektrische Verbindung geschaltet werden kann.

In einer weiteren bevorzugten Ausführungsform der vorliegenden Erfindung bestehen die Module des Umrichtersystems aus einem Modul-Kondensator und jeweils zwei parallel zum Modul-Kondensator liegende Serienschaltungen von je zwei Schaltelementen. Jede dieser beiden Serienschaltungen enthält somit einen Verbindungspunkt zwischen zwei aufeinanderfolgenden Schaltern. Die Anschlüsse zum ersten benachbarten Modul sind direkt mit diesen Verbindungspunkten dieser Serienschaltungen verbunden. Weiterhin sind die Anschlüsse zum zweiten benachbarten Modul einmal direkt und einmal über ein weiteres Schaltelement mit diesen Mittelpunkten der Serienschaltungen verbunden. Auf diese Weise ergibt sich eine Serienschaltung von gleichartigen Modulen, wobei immer jedes nachfolgende Modul relativ zu seinem vorhergehenden Modul der horizontal dargestellten Hintereinanderschaltung an einer horizontalen Achse gespiegelt ist. Mit anderen Worten enthalten die Anschlüsse zum zweiten benachbarten Modul abwechselnd oben oder unten ihr weiteres Schaltelement, während der jeweils andere Anschluss zum zweiten benachbarten Modul direkt verbunden ist.

Im Rahmen der vorliegenden Offenbarung wird auch ein Verfahren zum Ansteuern eines Umrichters für Stromversorgungen beschrieben. Der Umrichter besteht dabei aus gleichartigen hintereinander geschalteten Modulen.

Jedes Modul weist mehrere Schaltelemente und mindestens 4 Anschlüsse auf und enthält mindestens einen Modul-Kondensator zur Energiespeicherung.

Das Verfahren umfasst die folgenden Schritte:

- Auswählen einer Einstellung der Schaltelemente eines Moduls, dass wahlweise entweder eine direkte elektrische Verbindung über mindestens einen seiner Anschlüsse eines ersten zu dem Modul benachbarten Moduls zu einem zweiten zu dem Modul benachbarten Modul erfolgt, oder dass der Modul-Kondensator des Moduls über einen Anschluss zu einem Modul-Kondensator eines benachbarten Moduls in Serie geschaltet wird oder dass der Modul-Kondensator des Moduls über zwei Anschlüsse zu einem Modul-Kondensator eines benachbarten Moduls in parallel geschaltet wird, wobei das Parallelschalten von Modul-Kondensatoren von Modulen, deren Parallelschaltung erfolgen soll, beginnend mit einem ersten Modul-Kondensator der Reihe nach im laufenden Betrieb des Umrichters zugeschaltet werden, wobei dieses Zuschalten der Module die folgenden Teilschritte umfasst:

  ▪ Auswahl des Modul-Kondensators unter den Modul-Kondensatoren der geplanten Parallelschaltung mit der niedrigsten Spannung als ersten Modul-Kondensator, wenn ein Laststrom durch den Umrichter diesen Modul-Kondensator auflädt, bzw. Auswahl des Modul-Kondensators mit der höchsten Spannung als ersten Modul-Kondensator, wenn ein Laststrom durch den Umrichter diesen Modul-Kondensator entlädt;

  ▪ Auswahl eines parallelzuschaltenden Modul-Kondensators mit der zweitniedrigsten Spannung, wenn ein Laststrom durch den Umrichter den ersten Modul-Kondensator auflädt, bzw. Auswahl eines parallelzuschaltenden Modul-Kondensators mit der zweihöchsten Spannung, wenn ein Laststrom durch den Umrichter den ersten Modul-Kondensator entlädt;

  ▪ Parallelschalten dieses ausgewählten parallelzuschaltenden Modul-Kondensators zum ersten Modul-Kondensator, wenn der Laststrom durch den Umrichter den ersten Modul-Kondensator so weit aufgeladen bzw. entladen hat, dass er die gleiche Spannung wie der ausgewählte parallelzuschaltende Modul-Kondensator hat; und

  ▪ Wiederholung der vorigen beiden Schritte, bis alle Modul-Kondensatoren deren Parallelschaltung erfolgen soll miteinander parallel geschaltet sind.

Die offenbarten Systeme und Verfahren bieten folgende Vorteile:

- Der Ladungsausgleich zwischen Ladungen von Modul-Kondensatoren kann beliebig verlustarm erfolgen.

- Die Auslegung der elektronischen Bauelemente eines Moduls muss lediglich auf die Modulspannung festgelegt werden, so dass über eine Vielzahl von Einzelmodulen Umrichter mit sehr großen Spannungsfestigkeiten aufgebaut werden können.

- Die Spannungs-Symmetrierung der Module erfolgt direkt über die entsprechende Ansteuerung der Schaltelemente. Zusätzliche Symmetrierungen sind hier nicht erforderlich.

- Die Schaltungstopologie der Einzelmodule gewährt durch die Energiespeicherelemente einen Überspannungsschutz gegenüber den Ein-/Ausgängen (Tiefpasswirkung).

- Ausfallsicherheit durch Ausnutzung der Redundanzen in der Steuerung.

- Die Option mit dem Aufbau die Energiespeicherelemente wahlweise in Serie oder parallel zu schalten erlaubt den Bau von Umrichtern mit großem Spannungsverhältnis (und entsprechendem Stromverhältnis) zwischen Ein- und Ausgangsklemmen. Ein solches System hat deutlich geringere Verluste als bisherige Umrichter, da jeweils bei der kleineren Spannung ein Anzahl von Modulen parallel geschaltet wird. Insbesondere werden die Ohmschen Verluste der Energiespeicher, aber auch der Schaltelemente reduziert.

- Durch den Wegfall von Verlusten beim Umschalten der Modul-Kondensatoren von Reihen- auf Parallelschaltung kann der Umrichter auch als Transformatorersatz zur effektiven Wandlung von Gleich- und Wechselspannung sowohl zur Erhöhung einer Eingangsspannung, wie auch zur Senkung einer Eingangsspannung verwendet werden. Auf diese Weise lassen sich - bei entsprechend schneller Taktung des Umrichters - sehr kleine Wandler mit sehr hoher Leistungsdichte bauen.

- Da bei entsprechender Konfiguration der Module ein Ladungsausgleich auch zu Modulen benachbarter Brückenzweige hin erfolgen kann, sind bei Verwendung der beschriebenen Module und Zwischenmodule auch völlig neue Topologien für mehrphasige Stromrichter möglich, da die bisherige Funktion einer gemeinsamen Gleichspannungsschiene mit einer definierten Zwischenkreisspannung nicht mehr erforderlich ist.

KURZBESCHREIBUNG DER ZEICHNUNGEN

Im folgenden werden Aspekte von Umrichtern mit Bezug zu den Figuren im Detail beschrieben, wobei:

Fig. 1    einen Brückenzweig eines modularen Multilevelkonverters nach dem Stand der Technik, bestehend aus drei gleichen Zweipolen beschreibt;

Fig. 2    den möglichen Aufbau eines einzelnen Moduls eines modularen Multilevelkonverters nach dem Stand der Technik zeigt;

Fig. 3    ein Phasenmodul eines modularen Multilevelkonverters nach dem Stand der Technik zeigt, welches aus zwei Brückenzweigen mit je drei gleichen Zweipolen aufgebaut ist;

Fig. 4    ein System zur Umwandlung einer 1-phasigen Wechselspannung (bzw. einer Gleichspannung) in eine andere 1-phasigen Wechselspannung (bzw. Gleichspannung) zeigt, welches aus zwei zusammengeschalteten Phasenmodulen eines modularen Multilevelkonverters nach dem Stand der Technik besteht;

Fig. 5    ein System zur Umwandlung einer 3-phasigen Wechselspannung in eine 1-phasige Wechselspannung bzw. eine Gleichspannung zeigt, welches aus drei zusammengeschalteten Phasenmodulen eines modularen Multilevelkonverters nach dem Stand der Technik besteht;

Fig. 6    ein System zur Kopplung eines 3-phasigen Drehstromnetzes mit einem zweiphasigen Netz zeigt, welches aus drei und zwei zusammengeschalteten Phasenmodulen eines modularen Multilevelkonverters nach dem Stand der Technik besteht;

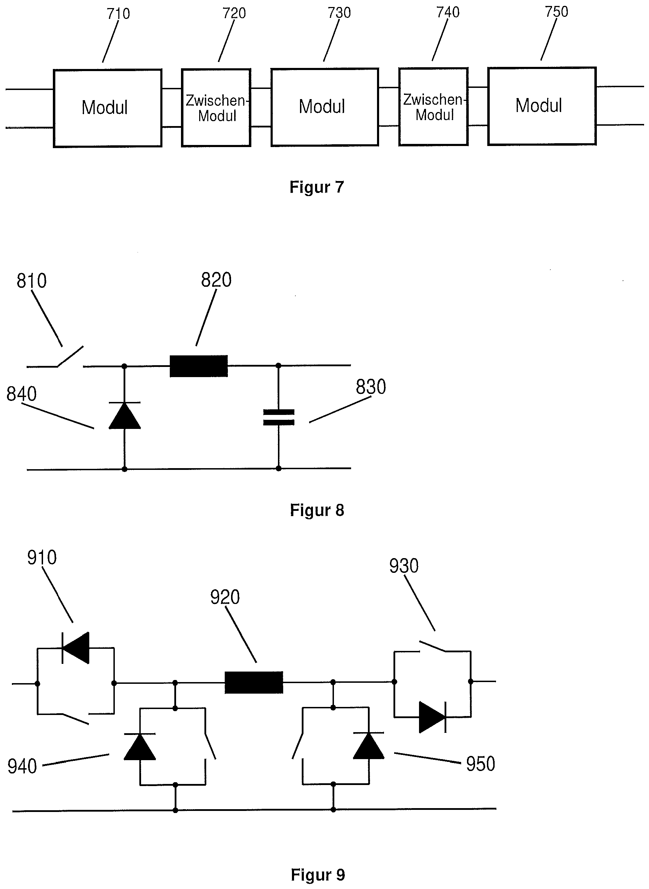

Fig. 7    eine Modulstruktur bestehend aus Modulen und Zwischenmodulen zeigt;

Fig. 8    einen getakteten Abwärtswandler zeigt;

Fig. 9    einen getakteten Wandler zeigt, der sowohl als Aufwärtswandler, wie auch als Abwärtswandler verwendet werden kann;

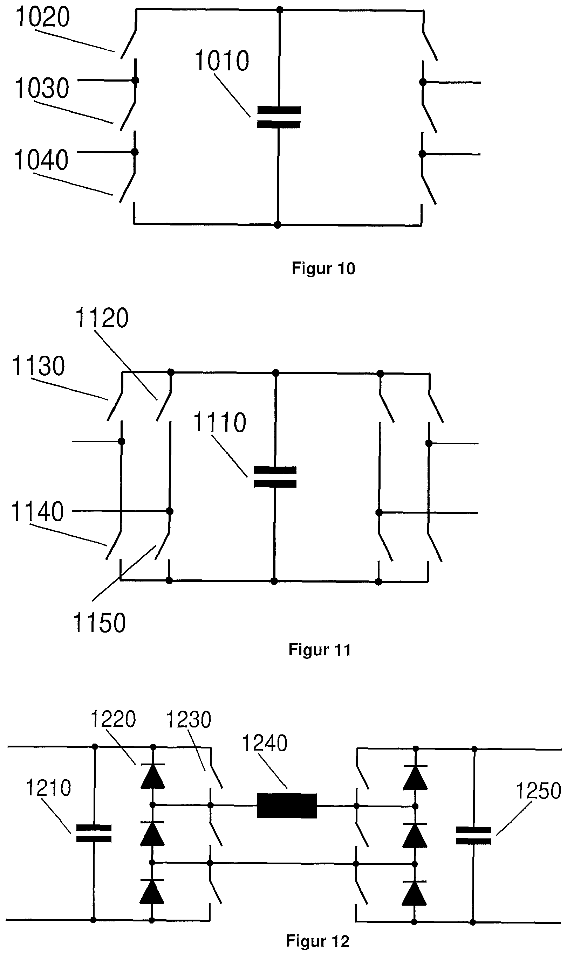

Fig. 10    eine erstes bevorzugtes Beispiel eines Moduls zeigt, wie es in einem Umrichter mit zusätzlichen Zwischenmodulen verwendet werden kann;

Fig. 11    eine zweites bevorzugtes Beispiel eines Moduls zeigt, wie es in einem Umrichter mit zusätzlichen Zwischenmodulen verwendet werden kann;

Fig. 12    die Verbindung zweier Module über eine Induktivität als Zwischenmodul zeigt, wobei die Module dem ersten Beispiel entsprechen und Schutzdioden parallel zu den Schaltern enthalten;

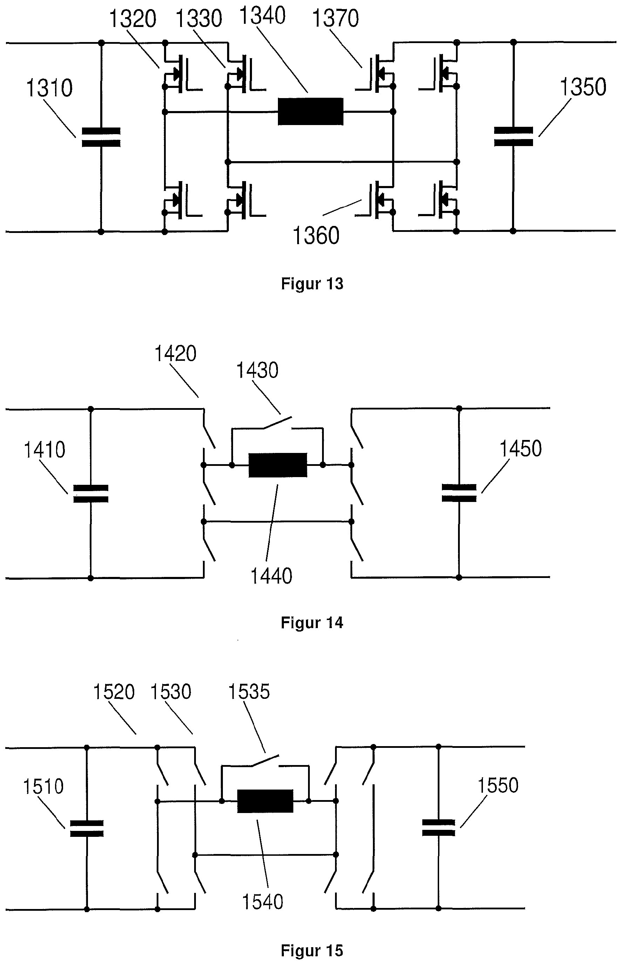

Fig. 13    die Verbindung zweier Module über eine Induktivität als Zwischenmodul zeigt, wobei die Module dem zweiten Beispiel entsprechen und MOSFETs als Schalter enthalten;

Fig. 14    die Verbindung zweier Module über eine Induktivität mit Bypassschalter als Zwischenmodul zeigt, wobei die Module dem ersten Beispiel entsprechen;

Fig. 15    die Verbindung zweier Module über eine Induktivität mit Bypassschalter als Zwischenmodul zeigt, wobei die Module dem zweiten Beispiel entsprechen;

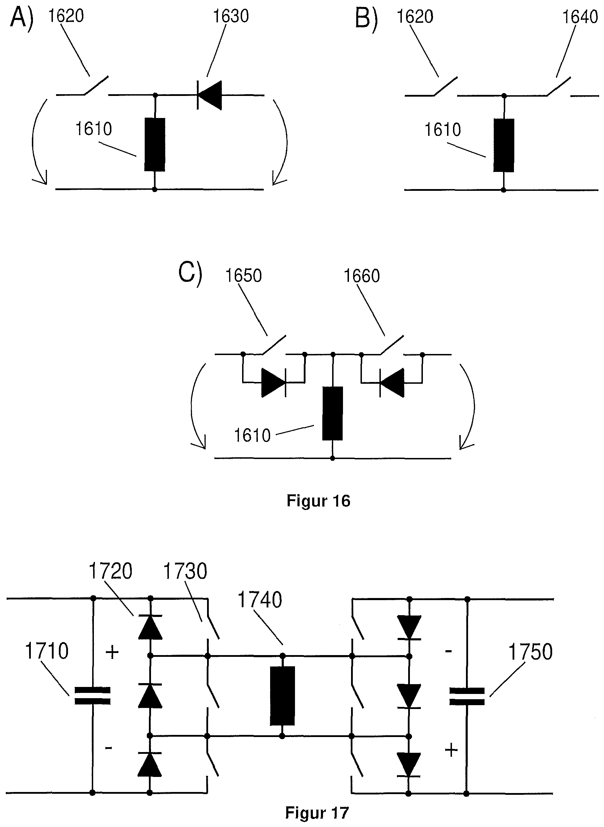

Fig. 16    verschiedene Modifikationsformen eines Buck-Boost-Converters zeigen;

Fig. 17    die Verbindung zweier Module über eine Induktivität nach dem Konzept eines Buck-Boost-Converters als Zwischenmodul zeigt, wobei die Module der ersten Ausführungsform entsprechen;

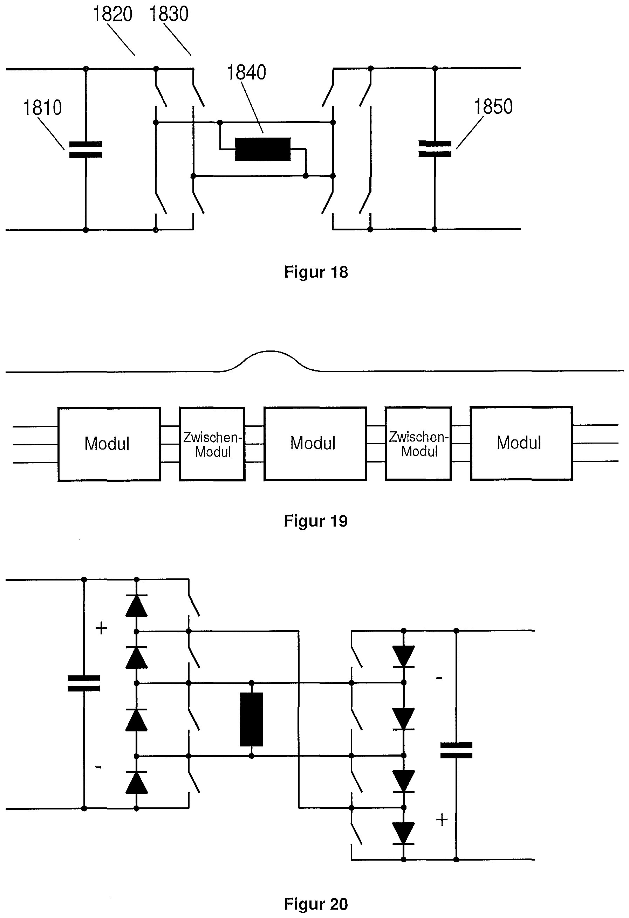

Fig. 18    die Verbindung zweier Module über eine Induktivität nach dem Konzept eines Buck-Boost-Converters als Zwischenmodul zeigt, wobei die Module dem zweiten Beispiel entsprechen;

Fig. 19    eine Modulstruktur bestehend aus Modulen und Zwischenmodulen und den Ausgleich von Ladungen zwischen den Modulen zeigt;

Fig. 20    eine Modulstruktur abgeleitet von dem ersten Beispiel mit jeweils drei Abgriffen zum Nachbarmodul, Schutzdioden parallel zu den Schaltern und einer Induktivität zwischen den Verbindungsleitungen als Zwischenmodul zeigt;

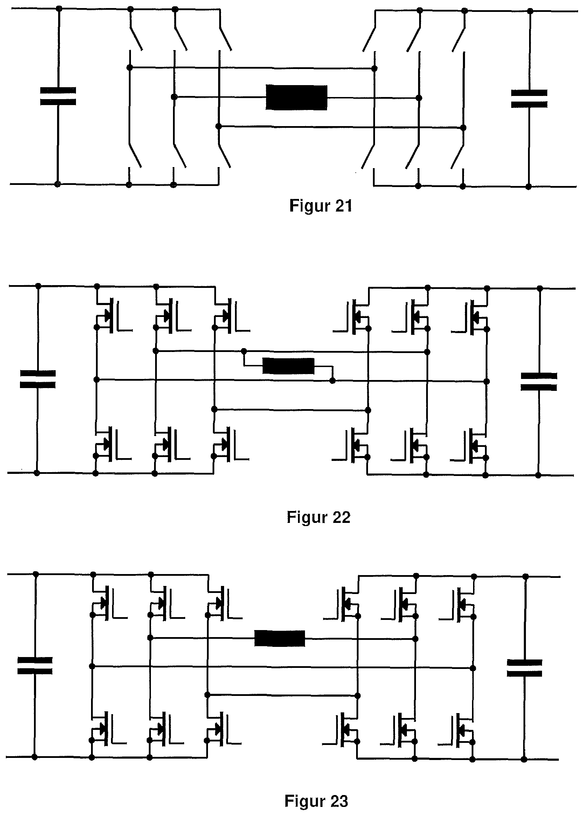

Fig. 21    eine Modulstruktur abgeleitet von dem zweiten Beispiel mit jeweils drei Abgriffen zum Nachbarmodul und einer Induktivität innerhalb einer Verbindungsleitung als Zwischenmodul zeigt;

Fig. 22    eine Modulstruktur abgeleitet von dem zweiten Beispiel mit jeweils drei Abgriffen zum Nachbarmodul, MOSFETs als Schalter und einer Induktivität zwischen zwei Verbindungsleitungen als Zwischenmodul zeigt;

Fig. 23    eine Modulstruktur abgeleitet von dem zweiten Beispiel mit jeweils drei Abgriffen zum Nachbarmodul, MOSFETs als Schalter und einer Induktivität innerhalb einer Verbindungsleitung als Zwischenmodul zeigt;

Fig. 24    eine Modulstruktur bestehend aus Modulen zeigt, welche so ausgeführt sind, dass sie einen Ladungsausgleich gemäß der Erfindung durchführen können;

Fig. 25    eine erste Variante von Modulen zeigt, welche einen Ladungsausgleich gemäß der Erfindung durchführen können;

Fig. 26    eine zweite Variante von Modulen zeigt, welche einen Ladungsausgleich gemäß der Erfindung durchführen können.

In den Zeichnungen sollen gleiche Bezugszeichen gleiche Teile, Bauteile und Anordnungen bezeichnen.

DETAILLIERTE BESCHREIBUNG BEVORZUGTER AUSFÜHRUNGSFORMEN

Die Erfindung basiert auf der Erkenntnis, dass ein Stromrichter, der aus einer Hintereinanderschaltung von mehreren gleichartigen Modulen aufgebaut und bei dem die Kondensatoren der Module wahlweise parallel oder seriell geschaltet werden können, so auszuführen ist, dass die Spannungen der Kondensatoren vor dem Parallelschalten einander angeglichen werden sollten.

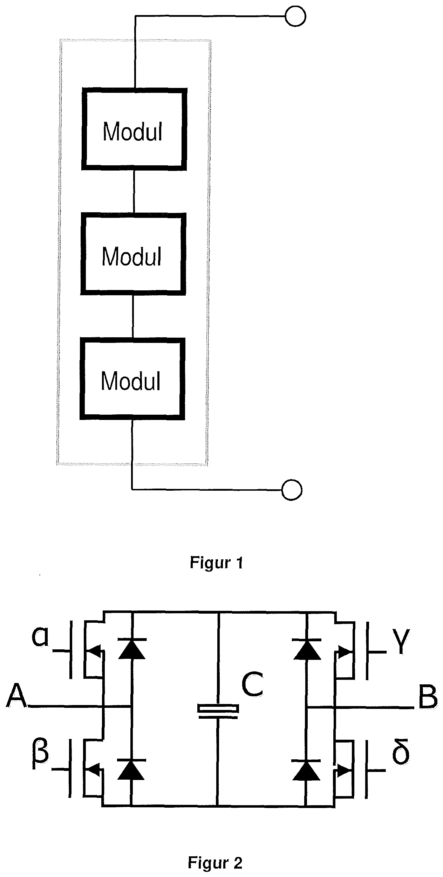

Figur 1 zeigt einen Brückenzweig eines modularen Multilevelkonverters wie er in DE 102 17 889 A1 genauer beschrieben ist, bestehend aus mehreren gleichartigen in Serie geschalteten Zweipolen. Dargestellt sind hier drei in Serie geschaltete Zweipole; es können jedoch auch zwei oder aber beliebig viele solcher Zweipole in Serie geschaltet werden. Jedes Einzelmodul fungiert als ein Zweipol und enthält ein Energiespeicherelement in Form eines Kondensators, sowie mehrere Schaltelemente, die für beide Spannungsrichtungen wahlweise Strom aufnehmen oder abgeben können und damit alle vier Quadranten des Strom-Spannungs-Graphen erreichen.

Figur 2 zeigt den möglichen inneren Aufbau eines solchen Zweipol-Elements mit vier Halbleiterschaltern, zusätzlichen Schutzdioden und einem Energiespeicher-Kondensator.

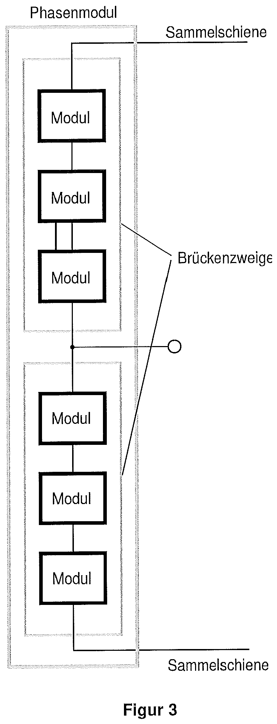

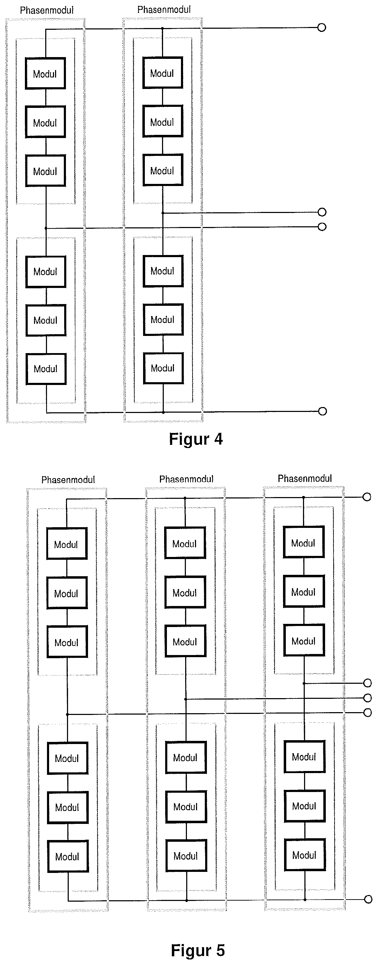

Figur 3 zeigt ein Phasenmodul eines modularen Multilevelkonverters, welches aus zwei in Serie geschalteten Brückenzweigen nach Figur 1 aufgebaut ist. Über die obere und untere Sammelschiene können mehrere Phasenmodule miteinander verbunden sein, während der mittlere Anschluss mit einer Phase eines ein- oder mehrphasigen Wechselstromnetzes verbunden ist. Entsprechend zeigen die Figuren 4 und 5 die Zusammenschaltung von zwei bzw. drei Phasenmodulen. Mit zwei Phasenmodulen kann eine 1-phasige Wechselspannung bzw. eine Gleichspannung in eine andere 1-phasige Wechselspannung bzw. eine Gleichspannung umgewandelt werden. Die Zusammenschaltung von drei Phasenmodulen gemäß Figur 5 ergibt ein System zur Umwandlung einer 3-phasigen Wechselspannung in eine 1-phasige Wechselspannung bzw. eine Gleichspannung.

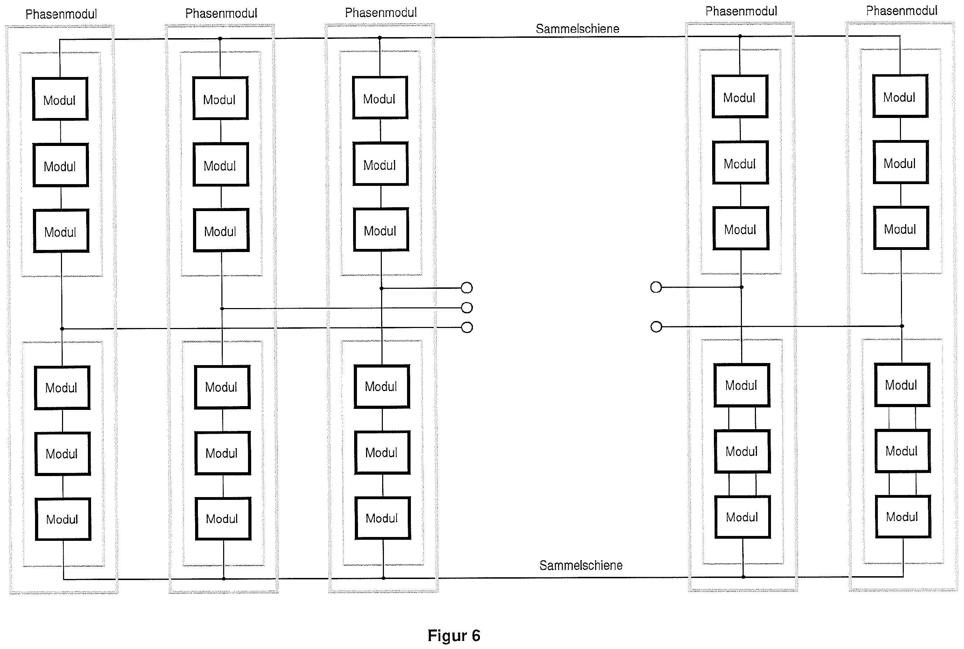

Weiterhin ist in Figur 6 beispielhaft die Kopplung eines dreiphasigen Drehstromnetzes mit einem zweiphasigen Netz dargestellt. Der Energiefluss dieser beiden Netze findet dabei wieder über die zwei Leitungen der Sammelschiene statt.

Bei Verwendung von Modulen, welche für den Vierquadranten-Betrieb ausgelegt sind, ist der Aufbau solcher Systeme vollkommen symmetrisch bezüglich der Ein- bzw. Ausgänge und ermöglicht somit gegenüber jedem Anschlusspaar einen vollständigen Vierquadrantenbetrieb.

Ein Spannungsausgleich der Spannungen der Modul-Kondensatoren kann durch den Einsatz spezieller Module und einer entsprechenden Ansteuerung vorgenommen werden. Dabei werden die Modul-Kondensatoren in aufsteigender oder absteigender Reihenfolge geladen oder entladen. Hierbei müssen die Module allerdings zusätzlich so ausgelegt sein, dass nicht nur eine wahlweise Reihen- oder Parallelschaltung vorgenommen werden kann, sondern dass auch einzelne Modul-Kondensatoren aus der Verschaltung ausgenommen werden können. Auf diese Weise können solche Module zwar beispielsweise ihr linkes benachbartes Modul elektrisch mit dem rechten benachbarten Modul in der Weise verbinden, dass deren Modul-Kondensatoren in Reihe oder parallel geschaltet sind, ihr eigener Modul-Kondensator jedoch nicht in diesen Kreis einbezogen wird. In diesem Fall erfolgt also eine direkte elektrische Verbindung eines Moduls zu einem nicht unmittelbar benachbarten Modul unter Überspringen der dazwischenliegenden Module, wobei die direkte elektrische Verbindung mindestens zweipolig sein muss, wenn eine Parallelschaltung von Modul-Kondensatoren unter Überspringen dazwischenliegender Module vorgenommen werden soll.

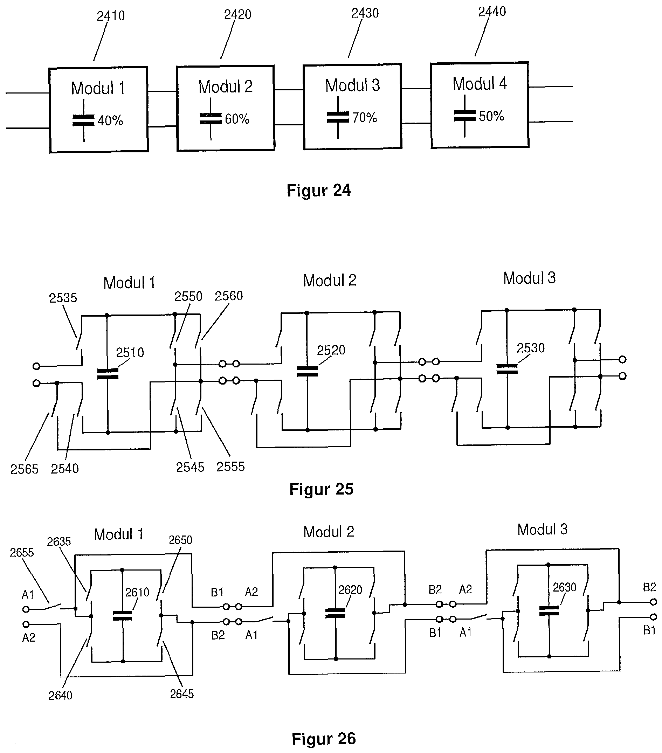

Figur 24 zeigt allgemein eine Modulstruktur bestehend aus den Modulen 2410, 2420, 2430 und 2440, welche so ausgeführt sind, dass sie einen Ladungsausgleich durchführen können. Wenn beispielsweise eine Parallelschaltung der Modul-Kondensatoren aller in Figur 24 gezeigten Module während eines Ladevorganges angestrebt wird, so müssen die einzelnen Parallel-Schaltvorgänge unter Berücksichtigung der entsprechenden dargestellten Ladezustände durchgeführt werden: Zunächst wird nur der Modul-Kondensator von Modul 2410 geladen, da er mit 40% die niedrigste Ladespannung aufweist, während die übrigen Modul-Kondensatoren wenigstens über einen Anschluss nicht mit den Verbindungsleitungen der Module verbunden sind. Wenn die Spannung im Modul-Kondensator von Modul 2410 auf 50% angestiegen ist, wird der Modul-Kondensator von Modul 2440 parallel geschaltet, wobei die Modul-Kondensatoren der Module 2420 und 2430 übersprungen werden. Nun wird diese Parallelschaltung so weit geladen, bis die Spannung auf 60% angestiegen ist, so dass der Modul-Kondensator von Modul 2420 zusätzlich parallel geschaltet werden kann. Anschließend werden die drei parallel geschalteten Modul-Kondensatoren der Module 2410, 2420 und 2440 von 60% auf 70% geladen, so dass der vierte Modul-Kondensator von Modul 2430 ohne entsprechende Umladeverluste parallel geschaltet werden kann.

Figur 25 zeigt eine erste mögliche Ausführungsform für Module, welche einen Ladungsausgleich zwischen den Modulkondensatoren 2510, 2520, 2530 ohne Zwischenmodule erlaubt. Die Schalter symbolisieren hierbei wieder jede mögliche Art von geeignetem Halbleiterschalter; insbesondere können parallel zu diesen Schaltern auch wieder entsprechend polarisierte Schutzdioden angebracht sein.

Beispielsweise kann ein Parallelschalten der Modul-Kondensatoren erreicht werden, wenn bei den Modulen die jeweiligen Schalter 2535, 2540, 2550 und 2555 geschlossen werden. Die jeweils nicht erwähnten Schalter sollen dabei stets offen bleiben. Alternativ können die Modul-Kondensatoren auch mit invertierter Polarität parallel geschaltet werden, wenn die Schalter 2535, 2540, 2545 und 2560 geschlossen werden.

Das Überspringen eines Moduls bei gleichzeitiger Parallelschaltung zu einem nachfolgenden Modul-Kondensator wird ermöglicht, wenn die Schalter 2535, 2550 und 2565 geschlossen werden. Bei einer Reihenschaltung der Modul-Kondensatoren reicht es aus, entweder nur die Schalter 2535 und 2550 zu schließen (obere Verbindungsleitung) oder nur den Schalter 2565 zu schließen (untere Verbindungsleitung).

Weiterhin können durch Schließen der Schalter 2535 und 2545 die einzelnen Modul-Kondensatoren über die obere Verbindungsleitung in Serie geschaltet werden. Alternativ können sie auch durch Schließen der Schalter 2540 und 2560 über die untere Verbindungsleitung in Serie geschaltet werden.

Schließlich kann auch eine Serienschaltung von Modul-Kondensatoren so erfolgen, dass jeweils ein nachfolgender Kondensator zum vorhergehenden invertiert geschaltet ist, indem man die Schalter 2535 und 2555 schließt. Beim jeweils nachfolgenden Modul müssen dann entsprechend die Schalter 2540 und 2550 geschlossen werden.

Figur 26 zeigt eine zweite mögliche Ausführungsform für Module, welche einen Ladungsausgleich zwischen den Modulkondensatoren 2610, 2620, 2630 ohne Zwischenmodule erlaubt. Die Schalter symbolisieren hierbei wieder jede mögliche Art von geeignetem Halbleiterschalter; insbesondere können parallel zu diesen Schaltern auch wieder entsprechend polarisierte Schutzdioden angebracht sein. Die Module dieser Ausführungsform müssen dabei für eine Hintereinanderschaltung jeweils so verbunden werden, dass jeweils der obere und untere Anschluss eines nachfolgenden Moduls jeweils relativ zu seinem Vorgänger vertauscht wird.

Hier kann ein Parallelschalten der Modul-Kondensatoren erreicht werden, wenn jeweils die Schalter 2635, 2645 und 2655 oder die Schalter 2640, 2650 und 2655 geschlossen werden. Nicht erwähnte Schalter sind jeweils geöffnet.

Durch Schließen der Schalter 2635 und 2645 oder der Schalter 2640 und 2650 können die Modul-Kondensatoren in Serie geschaltet werden.

Wenn lediglich der Schalter 2655 geschlossen wird, kann ein Modul-Kondensator bei Parallel-Schalten des rechten und linken Nachbar-Kondensators überbrückt werden. Schließlich kann ein Modul-Kondensator bei in Reihe-Schalten des rechten und linken Nachbar-Kondensators überbrückt werden, wenn die Schalter 2635 und 2650 oder die Schalter 2640 und 2645 geschlossen werden.

Eine Hintereinanderschaltung solcher Module kann dabei einen Brückenzweig bilden, wobei die jeweils äußeren Anschlüsse der endständigen Module entweder zusammengefasst werden können, oder einen Anschluss zum benachbarten Brückenzweig weitergeführt werden kann. Die beiden Ausführungsformen nach den Figuren 25 und 26 zeigen beispielhaft zwei mögliche Ausführungsformen eines Umrichters mit Multilevelkonverter-Modulen, welche einerseits wahlweise eine Reihen- oder Parallelschaltung der Modul-Kondensatoren erlaubt und andererseits einen verlustarmen Ladungsausgleich unter den Modul-Kondensatoren gestattet. Allerdings kann die erfinderische Idee auch durch andere Schalter-Kondensator-Konfigurationen realisiert werden. Insbesondere können die nach dem in den Figuren 25 und 26 beschriebenen Module natürlich noch durch weitere geschaltete oder nicht geschaltete elektrische Verbindungen zwischen den jeweiligen Modulen erweitert werden.

**Patentansprüche**

1. Elektrisches Umrichtersystem für Stromversorgungen, umfassend mindestens zwei gleichartige hintereinander geschaltete Module (2410, 2420, 2430, 2440), wobei jedes Modul mindestens 4 Anschlüsse und mindestens einen Modul-Energiespeicher (2510; 2610) zur Energiespeicherung enthält, und die Module Schaltelemente (2535, 2540, 2545, 2550, 2555, 2560, 2565; 2635, 2640, 2645, 2650, 2655) enthalten, und wobei die Schaltelemente die Modul-Energiespeicher der Module sowohl in Serie als auch parallel schalten können, **dadurch gekennzeichnet, dass** das Umrichtersystem eine Steuerschaltung umfasst, die die Module (2410, 2420, 2430, 2440) derart ansteuert, dass die Modul-Energiespeicher von Modulen, deren Parallelschaltung erfolgen soll, beginnend mit einem ersten Modul-Energiespeicher der Reihe nach im laufenden Betrieb des Umrichters zugeschaltet werden, wobei dieses Zuschalten der Module die folgenden Schritte umfasst:

    Auswahl des Modul-Energiespeichers unter den Modul-Energiespeichern der geplanten Parallelschaltung mit der niedrigsten Spannung als ersten Modul-Energiespeicher, wenn ein Laststrom durch den Umrichter diesen Modul-Energiespeicher auflädt, bzw. Auswahl des Modul-Energiespeichers mit der höchsten Spannung als ersten Modul-Energiespeicher, wenn ein Laststrom durch den Umrichter diesen Modul-Energiespeicher entlädt;
    Auswahl eines parallelzuschaltenden Modul-Energiespeichers mit der zweitniedrigsten Spannung, wenn ein Laststrom durch den Umrichter den ersten Modul-Energiespeicher auflädt, bzw. Auswahl eines parallelzuschaltenden Modul-Energiespeichers mit der zweihöchsten Spannung, wenn ein Laststrom durch den Umrichter den ersten Modul-Energiespeicher entlädt;

Parallelschalten dieses ausgewählten parallelzuschaltenden Modul-Energiespeichers zum ersten Modul-Energiespeicher, wenn der Laststrom durch den Umrichter den ersten Modul-Energiespeicher so weit aufgeladen bzw. entladen hat, dass er die gleiche Spannung wie der ausgewählte parallelzuschaltende Modul-Energiespeicher hat; und

Wiederholung der vorigen beiden Schritte, bis alle Modul-Energiespeicher deren Parallelschaltung erfolgen soll miteinander parallel geschaltet sind,

wobei die Module (2410, 2420, 2430, 2440) für den Fall, dass das Umrichtersystem drei oder mehr gleichartige hintereinandergeschaltete Module (2410, 2420, 2430, 2440) umfasst, hinsichtlich ihrer Schaltelemente so ausgeführt sind, dass ein Parallelschalten von Modul-Energiespeichern auch möglich ist, wenn deren Module nicht unmittelbar benachbart sind.

2. Elektrisches Umrichtersystem nach Anspruch 1, welches zumindest drei gleichartige hintereinandergeschaltete Module (2410, 2420, 2430, 2440) umfasst, wobei die Module (2410, 2420, 2430, 2440) jeweils zwei parallel zum Modul-Energiespeicher (2510) liegende Serienschaltungen von je zwei Schaltelementen (2545, 2550, 2555, 2560) umfassen, wobei die Mittelpunkte dieser Serienschaltungen zwei Anschlüsse des Moduls zum ersten benachbarten Modul bilden, wobei weiterhin zwei weitere Anschlüsse des Moduls zum zweiten benachbarten Modul gebildet werden über je ein weiteres Schaltelement (2535, 2540) zu den Anschlüssen des Modul-Energiespeichers und wobei über ein weiteres Schaltelement (2565) eine Verbindung von einem Anschluss zum ersten benachbarten Modul zu einem Anschluss zum zweiten benachbarten Modul bildet.

3. Elektrisches Umrichtersystem nach Anspruch 1, welches zumindest drei gleichartige hintereinandergeschaltete Module (2410, 2420, 2430, 2440) umfasst, wobei die Module (2410, 2420, 2430, 2440) jeweils zwei parallel zum Modul-Energiespeicher (2610) liegende Serienschaltungen von je zwei Schaltelementen (2635, 2640, 2645, 2650) umfassen, wobei die Anschlüsse zum ersten benachbarten Modul direkt mit den Mittelpunkten dieser Serienschaltungen verbunden sind und wobei die Anschlüsse zum zweiten benachbarten Modul einmal direkt und einmal über ein weiteres Schaltelement (2655) mit den Mittelpunkten dieser Serienschaltungen verbunden sind.

4. Elektrisches Umrichtersystem für Stromversorgungen nach Anspruch 1, wobei die Module (2410, 2420, 2430, 2440) so ausgeführt sind, dass der Modul-Energiespeicher (2530; 2630) eines nicht direkt benachbarten Moduls zum ersten Modul-Energiespeicher (2510; 2610) parallel geschaltet werden kann, ohne dass der oder die Modul-Energiespeicher (2520; 2620) dazwischen liegender Module parallel oder in Serie zum ersten Modul-Energiespeicher geschaltet sind.

5. Elektrisches Umrichtersystem für Stromversorgungen nach Anspruch 1, weiterhin umfassend eine Steuerschaltung, welche einerseits die gemessenen Spannungen der Modul-Energiespeicher (2510, 2520, 2530; 2610, 2620, 2630) in eine den Modulen zugeordnete Reihenfolge bringen kann und andererseits die Module so ansteuert, dass die oben beschriebene zeitliche Abfolge der Parallelschaltung von Modul-Energiespeichern realisiert werden kann.

6. Elektrisches Umrichtersystem nach einem der vorhergehenden Ansprüche, wobei die Schaltelemente jedes Moduls (710, 730, 750; 2410, 2420, 2430, 2440) so ausgeführt sind, dass über eine Gruppe aus einem oder mehreren Modulen eine elektrische Verbindung von einem links an die Gruppe angrenzenden Modul zu einem rechts an die Gruppe angrenzenden Modul in der Weise hergestellt werden kann, dass der oder die Modul-Energiespeicher der Gruppe nicht geladen oder entladen werden.

7. Elektrisches Umrichtersystem nach einem der vorhergehenden Ansprüche, wobei die mindestens zwei gleichartigen hintereinander geschalteten Module einen Brückenzweig mit zwei äußeren Leistungsanschlüssen bilden, wobei sich die Spannung an diesen äußeren Leistungsanschlüssen aus der Spannung aller in Reihe oder parallel geschalteten Modul-Energiespeicher ergibt.

8. Elektrisches Umrichtersystem nach Anspruch 7, wobei jeweils zwei in Serie geschaltete Brückenzweige ein Phasenmodul eines ein- oder mehrphasigen Stromrichters bilden.

9. Elektrisches Umrichtersystem nach einem der vorhergehenden Ansprüche, wobei die Schaltelemente als bipolare Transistoren, als IGBTs, als MOSFETs, als Thyristoren oder als GTOs ausgeführt sind.

10. Elektrisches Umrichtersystem nach einem der vorhergehenden Ansprüche, wobei zusätzlich parallel zu den Schaltelementen Dioden liegen und die Dioden so geschaltet sind, dass sie die Schaltelemente vor Verpolung und Überspannung schützen.

11. Elektrisches Umrichtersystem nach einem der vorhergehenden Ansprüche, wobei das Umrichtersystem nach dem Prinzip der Pulsweitenmodulation arbeitet und die Stromstärke über das Tastverhältnis der Pulsweitemodulation verändert.

12. Elektrisches Umrichtersystem nach einem der vorhergehenden Ansprüche, wobei das Umrichtersystem weiterhin eine Messschaltung umfasst, welche die Spannungswerte der einzelnen Modul-Energiespeicher misst.

13. Verfahren zur Ansteuerung eines Umrichters für Stromversorgungen, wobei der Umrichter mindestens zwei gleichartige hintereinander geschaltete Module (2410, 2420, 2430, 2440) umfasst und wobei jedes Modul Schaltelemente (2535, 2540, 2545, 2550, 2555, 2560, 2565; 2635, 2640, 2645, 2650, 2655) und mindestens 4 Anschlüsse aufweist und mindestens einen Modul-Energiespeicher (2510; 2610) zur Energiespeicherung enthält, wobei das Verfahren die folgenden Schritte umfasst:

Auswählen einer Einstellung der Schaltelemente eines Moduls, sodass wahlweise entweder eine direkte elektrische Verbindung über mindestens einen seiner Anschlüsse eines ersten zu dem Modul benachbarten Moduls zu einem zweiten zu dem Modul benachbarten Modul erfolgt, oder dass der Modul-Energiespeicher des Moduls über einen Anschluss zu einem Modul-Energiespeicher eines benachbarten Moduls (2520; 2620) in Serie geschaltet wird, oder dass der Modul-Energiespeicher des Moduls über zwei Anschlüsse zu dem Modul-Energiespeicher eines benachbarten Moduls parallel geschaltet wird, wobei das Parallelschalten von Modul-Energiespeichern von Modulen, deren Parallelschaltung erfolgen soll, beginnend mit einem ersten Modul-Energiespeicher der Reihe nach im laufenden Betrieb des Umrichters geschieht, wobei dieses Zuschalten der Module die folgenden Teilschritte umfasst:

Auswahl des Modul-Energiespeichers unter den Modul-Energiespeichern der geplanten Parallelschaltung mit der niedrigsten Spannung als ersten Modul-Energiespeicher, wenn ein Laststrom durch den Umrichter diesen Modul-Energiespeicher auflädt, bzw. Auswahl des Modul-Energiespeichers mit der höchsten Spannung als ersten Modul-Energiespeicher, wenn ein Laststrom durch den Umrichter diesen Modul-Energiespeicher entlädt;
Auswahl eines parallelzuschaltenden Modul-Energiespeichers mit der zweitniedrigsten Spannung, wenn ein Laststrom durch den Umrichter den ersten Modul-Energiespeicher auflädt, bzw. Auswahl eines parallelzuschaltenden Modul-Energiespeichers mit der zweihöchsten Spannung, wenn ein Laststrom durch den Umrichter den ersten Modul-Energiespeicher entlädt;
Parallelschalten dieses ausgewählten parallelzuschaltenden Modul-Energiespeichers zum ersten Modul-Energiespeicher, wenn der Laststrom durch den Umrichter den ersten Modul-Energiespeicher so weit aufgeladen bzw. entladen hat, dass er die gleiche Spannung wie der ausgewählte parallelzuschaltende Modul-Energiespeicher hat; und
Wiederholung der vorigen beiden Schritte, bis alle Modul-Energiespeicher deren Parallelschaltung erfolgen soll miteinander parallel geschaltet sind.

**Claims**

1. An electrical converter system for power supply, comprising at least two similar cascaded modules (2410, 2420, 2430, 2440), wherein each module comprises at least 4 terminals and at least one module energy storage (2510; 2610) for energy storage, and the modules include switching elements (2535, 2540, 2545, 2550, 2555, 2560, 2565; 2635, 2640, 2645, 2650, 2655), and wherein the switching elements can switch the module energy storages of the modules both in series and in parallel, **characterized in that**

the converter system comprises a control circuit, which controls the modules such that the module energy storages of modules, that are to be connected in parallel, can be added to the parallel connection one after the other, during operation of the converter, starting with a first module energy storage, wherein said adding of the modules to the parallel connection comprises the following steps:

selecting the module energy storage among the module energy storages for the planned parallel connection that has the lowest voltage as the first module energy storage when a load current through the inverter charges said module energy storage, or selecting the module energy storage that has the highest voltage as the first module energy storage when a load current through the inverter discharges said module energy storage;
selecting a module energy storage to be connected in parallel with the second lowest voltage when a load current through the inverter charges the first module energy storage, or selecting a module energy storage to be connected in parallel with the second highest voltage when a load current through the inverter discharges the first module energy storage;

connecting said selected module energy storage to be connected in parallel to the first module energy storage, when the load current through the converter has charged or discharged the first module energy storage to the point that it has the same voltage as the selected module energy storage for connection in parallel; and

repeating the previous two steps until all module energy storages that are to be connected in parallel have been connected in parallel with each other,

wherein in case the converter system comprises three or more similar cascaded modules (2410, 2420, 2430, and 2440), the modules (2410, 2420, 2430, and 2440) are designed with respect to their switching elements that a parallel connection of module energy storages is possible even when the modules are not directly adjacent.

2. The electrical converter system according to claim 1, which comprises at least three similar cascaded modules (2410, 2420, 2430, and 2440), wherein the modules (2410, 2420, 2430, 2440) each comprise two series circuits of two switching elements (2545, 2550, 2555, 2560), aligned parallel to the module energy storage (2510), wherein the centers of said series circuits form two connections between the module and the first adjacent module, wherein in addition two further connections between the module and the second adjacent module are also each formed via a further switching element (2535, 2540) to the terminals of the module energy storage, and wherein a connection from a terminal to the first adjacent module is formed to a terminal to the second adjacent module via a further switching element (2565).

3. The electrical converter system according to claim 1, which comprises at least three similar cascaded modules (2410, 2420, 2430, and 2440), wherein the modules (2410, 2420, 2430, 2440) each comprise two series circuits consisting of two switching elements (2635, 2640, 2645, 2650) aligned parallel with the module energy storage (2610), wherein the terminals to the first adjacent module are connected directly with the center points of said series circuits, and wherein one of the terminals to the second adjacent module is connected to one center point of said series circuits directly and the other is connected to the other center point via a further switching element (2655).

4. The electrical converter system for power supply according to claim 1, wherein the modules (2410, 2420, 2430, 2440) are designed such that the module energy storage (2530; 2630) of a module that is not immediately adjacent to the first module energy storage (2510; 2610) can be connected in parallel without the one or more module energy storages (2520; 2620) of modules therebetween being connected to the first module energy storage in parallel or in series.

5. The electrical converter system for power supply according to claim 1, further comprising a control circuit which is able to bring the measured voltages of the module energy storages (2510, 2520, 2530; 2610, 2620, 2630) into an order allocated to the modules, and also actuates the modules in such manner the chronological sequence of connection in parallel of module energy storages as described above can be carried out.

6. The electrical converter system according to any one of the preceding claims, wherein the switching elements of each module (710, 730, 750; 2410, 2420, 2430, 2440) are designed such that an electrical connection can be created across a group of one or more modules, from a module immediately to the left of the group to a module immediately to the right of the group in such a manner that the one or more module energy storages of the group is/are not charged or discharged.

7. The electrical converter system according to any one of the preceding claims, wherein the at least two identical cascaded modules form a bridge branch with two external power terminals, wherein the voltage at these outer power terminals is obtained from the voltage of all the module energy storages connected in series or parallel.

8. The electrical converter system according to claim 7, wherein two series-connected bridge branches each form a phase module of a single-phase or multi-phase power converter.

9. The electrical converter system according to any one of the preceding claims, wherein the switching elements are embodied as bipolar transistors, IGBTs, MOSFETs, thyristors or GTOs.

10. The electrical converter system according to any one of the preceding claims, wherein diodes are also aligned parallel with the switching elements, and the diodes are connected such that they protect the switching elements from polarity reversal and overvoltage.

**11.** The electrical converter system according to any one of the preceding claims, wherein the converter operates according to the principle of pulse width modulation and changes the current strength via the pulse width modulation duty cycle.

**12.** The electrical converter system according to any one of the preceding claims, wherein the converter further comprises a measuring circuit which measures the voltage values of each of the module energy storages.

**13.** A method for controlling a converter for power supply, wherein the converter comprises at least two similar cascaded modules (2410, 2420, 2430, 2440), and wherein each module comprises switching elements (2535, 2540, 2545, 2550, 2555, 2560, 2565; 2635, 2640, 2645, 2650, 2655) and at least 4 terminals and at least one energy storage module (2510; 2610) for energy storage, wherein the method comprises the following steps:

selecting a setting of the switching elements of a module so that selectively either a direct electrical connection is created via at least one of the terminals thereof from a first module adjacent to the module to a second module adjacent to the module, or so that the module energy storage of the module is connected in series to a module energy storage of an adjacent module (2520; 2620) via a terminal, or that the module energy storage of the module is connected in parallel to a module energy storage of an adjacent module via two terminals; wherein the parallel connection of module energy storages that are to be connected in parallel is carried out during operation of the converter and one after the other starting with a first module energy storage, wherein this parallel connection of the modules includes the following substeps:

From the module energy storages of the intended parallel connection, selecting the module energy storage with the lowest voltage as the first module energy storage when a load current through the converter charges this module energy storage, or selecting the module energy storage with the highest voltage as the first module energy storage when a load current through the converter discharges this module energy storage;

Selecting a module energy storage to be connected in parallel that has the second lowest voltage when a load current through the converter charges the first module energy storage, or selecting a module energy storage to be connected in parallel that has the second highest voltage when a load current through the converter discharges the first module energy storage;

Connecting this module energy storage intended for parallel connection in parallel with the first module energy storage when the load current through the converter has charged or discharged the first module energy storage to the point that is has the same voltage as the module energy storage that is to be connected in parallel; and

Repeating the preceding two steps until all module energy storages that are to be connected in parallel have been connected in parallel to each other.

**Revendications**

**1.** Système de convertisseur électrique pour des alimentations électriques, comprenant au moins deux modules (2410, 2420, 243, 2440) de même type branchés les uns derrière les autres, dans lequel chaque module contient au moins 4 raccordements et au moins un accumulateur d'énergie de module (2510 ; 2610) pour l'accumulation d'énergie et les modules contiennent des éléments de commutation (2535, 2540, 2545, 2550, 2555, 2560, 2565; 2635, 2640, 2645, 2650, 2655), et dans lequel les éléments de commutation peuvent brancher les accumulateurs d'énergie des modules aussi bien en série qu'en parallèle, **caractérisé en ce que** le système de convertisseur comprend un circuit de commande qui contrôle les modules (2410, 2420, 243, 2440) de façon à ce que les accumulateurs d'énergie des modules, dont le branchement doit être effectué en parallèle, en commençant par un premier accumulateur d'énergie de module de la rangée, soient ajoutés pendant le fonctionnement du convertisseur, dans lequel cet ajout des modules comprend les étapes suivantes :

sélection de l'accumulateur d'énergie de module parmi les accumulateurs d'énergie des modules du branchement en parallèle prévu avec la tension la plus basse en tant que premier accumulateur d'énergie de module, lorsqu'un courant de charge à travers le convertisseur charge cet accumulateur d'énergie de module, respectivement sélection de l'accumulateur d'énergie de module avec la tension la plus élevée en tant que premier accumulateur d'énergie de module, lorsqu'un courant de charge à travers le convertisseur décharge cet accumulateur d'énergie de module ;
sélection d'un accumulateur d'énergie de module à brancher en parallèle avec la deuxième tension la plus basse, lorsqu'un courant de charge à travers le convertisseur charge cet accumulateur d'énergie de module, respectivement sélection d'un accumulateur d'énergie de module à brancher en parallèle avec la deuxième tension la plus élevée, lorsqu'un courant de charge à travers le convertisseur décharge cet accumulateur d'énergie de module ;

branchement en parallèle de cet accumulateur d'énergie de module à brancher en parallèle avec le premier accumulateur d'énergie de module, lorsque le courant de charge à travers le convertisseur a chargé respectivement déchargé le premier accumulateur d'énergie de module jusqu'à ce qu'il présente la même tension que l'accumulateur d'énergie de module à brancher en parallèle sélectionné ; et

répétition des deux étapes précédentes jusqu'à ce que tous les accumulateurs d'énergie des modules dont le branchement doit être effectué en parallèle soient branchés en parallèle entre eux,

dans lequel les modules (2410, 2420, 2430, 2440), dans le cas où le système de convertisseur comprend trois modules (2410, 2420, 2430, 2440) ou plus de même type branchés les uns derrière les autres, sont conçus, en ce qui concerne leurs éléments de commutation, de façon à ce qu'un branchement en parallèle d'accumulateurs d'énergie de modules soit également possible lorsque leurs modules ne sont pas immédiatement adjacents.

2. Système de convertisseur électrique selon la revendication 1, qui comprend au moins trois modules (2410, 2420, 2430, 2440) de même type branchés les uns derrière les autres, dans lequel les modules (2410, 2420, 2430, 2440) comprennent chacun deux circuits en série, parallèles à l'accumulateur d'énergie de module (2510), constitués chacun de deux éléments de commutation (2545, 2550, 2555, 2560), dans lequel les centres de ces circuits en série constituent deux raccordements du module avec le premier module adjacent, dans lequel, en outre, deux autres raccordements du module avec le deuxième module adjacent sont formés par l'intermédiaire respectivement d'un autre élément de commutation (2535, 2540) avec les raccordements de l'accumulateur d'énergie de module et dans lequel, par l'intermédiaire d'un autre élément de commutation (2565), constitue une liaison d'un raccordement avec le premier module adjacent avec un raccordement avec le deuxième module adjacent.

3. Système de convertisseur électrique selon la revendication 1, qui comprend au moins trois modules (2410, 2420, 2430, 2440) de même type branchés les uns derrière les autres, dans lequel les modules (2410, 2420, 2430, 2440) comprennent chacun deux circuits en série, parallèles à l'accumulateur d'énergie de module (2610), constitués chacun de deux éléments de commutation (2635, 2640, 2645, 2650), dans lequel les raccordements avec le premier module adjacent sont reliés directement avec les centres de ces circuits en série et dans lequel les raccordements avec le deuxième module adjacent sont reliés une fois directement et une fois par l'intermédiaire d'un autre élément de commutation (2655) avec les centres de ces circuits en série.

4. Système de convertisseur électrique pour des alimentations électriques selon la revendication 1, dans lequel les modules (2410, 2420, 2430, 2440) sont conçus de façon à ce que l'accumulateur d'énergie de module (2530 ; 2630) d'un module non directement adjacent peut être branché en parallèle au premier accumulateur d'énergie de module (2510 ; 2610), sans que le ou les accumulateurs d'énergie de modules (2520 ; 2620) de modules situés entre eux soient branchés en parallèle ou en série avec le premier accumulateur d'énergie de module.

5. Système de convertisseur électrique pour des alimentations électriques selon la revendication 1, comprenant en outre un circuit de commande qui, d'une part, peut introduire les tensions mesurées des accumulateurs d'énergie de modules (2510, 2520, 2530; 2610, 2620, 2630) dans l'ordre correspondant aux modules et, d'autre part, contrôle les modules de façon à ce que la séquence temporelle décrite ci-dessus du branchement en parallèle d'accumulateurs d'énergie de modules puisse être réalisée.

6. Système de convertisseur électrique selon l'une des revendications précédentes, dans lequel les éléments de commutation de chaque module (710, 730, 750 ; 2410, 2420, 2430, 2440) sont conçus de façon à ce que, par l'intermédiaire d'un groupe constitué d'un ou plusieurs modules, une liaison électrique puisse être établie d'un module adjacent à gauche du groupe vers un module adjacent à droite du groupe, de façon à ce que le ou les accumulateurs d'énergie des modules du groupe ne soient pas chargés ou déchargés.

7. Système de convertisseur électrique selon l'une des revendications précédentes, dans lequel les au moins deux modules de même type branchés les uns derrière les autres forment une branche de pont avec deux raccordements de puissance externes, dans lequel la tension au niveau de ces raccordements de puissance externes résulte de la tension de tous les accumulateurs d'énergie des modules branchés en série ou en parallèle.

8. Système de convertisseur électrique selon la revendication 7, dans lequel respectivement deux branches de pont branchées en série forment un module de phase d'un convertisseur de courant monophasé ou multiphasé.

**9.** Système de convertisseur électrique selon l'une des revendications précédentes, dans lequel les éléments de commutation sont conçus comme des transistors bipolaires, des IGBT, des MOSFET, des thyristors ou des GTO.

**10.** Système de convertisseur électrique selon l'une des revendications précédentes, dans lequel, en outre, en parallèle aux éléments de commutation, se trouvent des diodes et les diodes sont branchées de façon à ce qu'elles protègent les éléments de commutation d'une inversion de polarité et d'une surtension.

**11.** Système de convertisseur électrique selon l'une des revendications précédentes, dans lequel le système de convertisseur fonctionne selon le principe de la modulation de largeur d'impulsions et modifie l'intensité du courant par l'intermédiaire du rapport cyclique de la modulation de largeur d'impulsions.

**12.** Système de convertisseur électrique selon l'une des revendications précédentes, dans lequel le système de convertisseur comprend en outre un circuit de mesure qui mesure les valeurs de tension des différents accumulateurs d'énergie de modules.

**13.** Procédé de contrôle d'un convertisseur pour des alimentations électriques, dans lequel le convertisseur comprend au moins deux modules (2410, 2420, 2430, 2440) de même type branchés les uns derrière les autres et dans lequel chaque module comprend des éléments de commutation (2535, 2540, 2545, 2550, 2555, 2560, 2565 ; 2635, 2640, 2645, 2650, 2655) et au moins 4 raccordements et contient au moins un accumulateur d'énergie de module (2510 ; 2610) pour l'accumulation d'énergie, dans lequel le procédé comprend les étapes suivantes :
sélection d'un réglage des éléments de commutation d'un module, de façon à ce qu'une liaison électrique directe soit effectuée par l'intermédiaire d'au moins un de ses raccordements d'un premier module adjacent au module avec un deuxième module adjacent au module, ou de façon à ce que l'accumulateur d'énergie du module soit branché en série par l'intermédiaire d'un raccordement avec un accumulateur d'énergie de module d'un module (2520 ; 2620) adjacent ou à ce que l'accumulateur d'énergie du module soit branché en parallèle par l'intermédiaire de deux raccordements avec l'accumulateur d'énergie d'un module adjacent, dans lequel le branchement en parallèle d'accumulateurs d'énergie de modules dont le branchement en parallèle doit être effectué, ait lieu en commençant par un premier accumulateur d'énergie de module de la série pendant le fonctionnement du convertisseur, dans lequel cet ajout des modules comprend les étapes partielles suivantes :

sélection de l'accumulateur d'énergie de module parmi les accumulateurs d'énergie des modules du branchement en parallèle prévu avec la tension la plus basse en tant que premier accumulateur d'énergie de module, lorsqu'un courant de charge à travers le convertisseur charge cet accumulateur d'énergie de module, respectivement sélection de l'accumulateur d'énergie de module avec la tension la plus élevée en tant que premier accumulateur d'énergie de module, lorsqu'un courant de charge à travers le convertisseur décharge cet accumulateur d'énergie de module ;
sélection d'un accumulateur d'énergie de module à brancher en parallèle avec la deuxième tension la plus basse, lorsqu'un courant de charge à travers le convertisseur charge cet accumulateur d'énergie de module, respectivement sélection d'un accumulateur d'énergie de module à brancher en parallèle avec la deuxième tension la plus élevée, lorsqu'un courant de charge à travers le convertisseur décharge cet accumulateur d'énergie de module ;
branchement en parallèle de cet accumulateur d'énergie de module à brancher en parallèle avec le premier accumulateur d'énergie de module, lorsque le courant de charge à travers le convertisseur a chargé respectivement déchargé le premier accumulateur d'énergie de module jusqu'à ce qu'il présente la même tension que l'accumulateur d'énergie de module à brancher en parallèle sélectionné ; et
répétition des deux étapes précédentes jusqu'à ce que tous les accumulateurs d'énergie des modules dont le branchement doit être effectué en parallèle soient branchés en parallèle entre eux.

Figur 1

Figur 2

Phasenmodul

Sammelschiene

Modul

Modul

Modul

Brückenzweige

Modul

Modul

Modul

Sammelschiene

**Figur 3**

Figur 4

Figur 5

Figur 6

710     720     730     740     750

| Modul | Zwischen-Modul | Modul | Zwischen-Modul | Modul |

**Figur 7**

810            820

840            830

**Figur 8**

910           930

920

940           950

**Figur 9**

Figur 10

Figur 11

Figur 12

1320 1330 1340 1370

1310

1350

1360

Figur 13

1420 1430

1410

1450

1440

Figur 14

1520 1530 1535

1510

1550

1540

Figur 15

Figur 16

Figur 17

1820  1830

1810  1840  1850

**Figur 18**

| Modul | Zwischen-Modul | Modul | Zwischen-Modul | Modul |

**Figur 19**

+

-

-

+

**Figur 20**

Figur 21

Figur 22

Figur 23

2410  2420  2430  2440

| Modul 1 | Modul 2 | Modul 3 | Modul 4 |
|---------|---------|---------|---------|
| ≡ 40%   | ≡ 60%   | ≡ 70%   | ≡ 50%   |

**Figur 24**

Modul 1  2550  2560  Modul 2  Modul 3

2535

2510        2520        2530

2565  2540        2545  2555

**Figur 25**

2655  2635  Modul 1  2650  Modul 2  Modul 3

A1        2610  B1  A2        2620  B2  A2        2630  B2
A2              B2  A1              B1  A1              B1

2640        2645

**Figur 26**

**EP 3 496 259 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10217889 A1
- DE 102010052934
- WO 2008046772 A1